(19) **Europäisches Patentamt / European Patent Office / Office européen des brevets**

(11) **EP 4 764 786 A1**

(12) **EUROPEAN PATENT APPLICATION**
published in accordance with Art. 153(4) EPC

(43) Date of publication:
24.06.2026 Bulletin 2026/26

(21) Application number: 25770210.0

(22) Date of filing: 09.07.2025

(51) International Patent Classification (IPC):
*G06F 1/26* (2006.01)

(86) International application number:
PCT/CN2025/107749

(87) International publication number:
WO 2026/066506 (02.04.2026 Gazette 2026/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 25.09.2024 CN 202411342990

(71) Applicant: Suzhou Metabrain Intelligent
Technology Co., Ltd.
Suzhou, Jiangsu 215000 (CN)

(72) Inventors:
• WU, Mingwei
Suzhou, Jiangsu 215000 (CN)
• CHEN, An
Suzhou, Jiangsu 215000 (CN)

(74) Representative: Studio Torta S.p.A.
Via Viotti, 9
10121 Torino (IT)

(54) **POWER SUPPLY DEVICE FOR SERVER**

(57) Some embodiments of the present invention provide a server power supply device, including a power supply and an energy storage device, wherein the power supply is provided with power supply ports, the energy storage device is provided with a charging port and a discharging port, one of the power supply ports is connected to the charging port, an other of the power supply ports is further configured to connect to an electrical energy input port of a server motherboard to be powered, and the discharging port is configured to connect to a component to be powered deployed on the server motherboard; the power supply is configured to supply power to the component to be powered through the electrical energy input port and charge the energy storage device; and the energy storage device is configured to, in a case where a target component in a target operating state is present in the component to be powered, continuously supply power to the target component according to a deficit of electrical energy supply of the target component in the target operating state. Through the present invention, the problem in the related art of low power supply efficiency for the component to be powered in a server is solved, thereby achieving the effect of improving the power supply efficiency of the component to be powered in the server.

Fig. 1

# EP 4 764 786 A1

## Description

### Cross-Reference to Related Application

This application claims priority to Chinese Patent Application No. 202411342990.7, filed to the China National Intellectual Property Administration on September 25, 2024 and entitled "Server Power Supply Device", the invention of which is hereby incorporated by reference in its entirety.

### Technical Field

Embodiments of the present invention relate to the field of computers, and in particular, to a server power supply device.

### Background

With the development and optimization of server technology, the application scope of server bearer services is constantly expanding. From individual users to large enterprises, all are using the computational advantages of servers to improve the service efficiency. At present, in certain service scenarios where, during service processing, since certain server components in the server need to operate in an overclocking mode due to a higher operational load, a peak power supply demand quantity of the server components far exceeds the maximum power that a server power supply may supply, thereby failing to meet the operation demand of the device. In the related art, in order to meet the peak power supply demand quantity of the device during overclocking operation, a power supply with a large electrical energy supply quantity is selected for the server. However, this method has a high design requirement for the power supply, a high design cost, and a long development cycle, resulting in low power supply efficiency for the server.

### Summary

Some embodiments of the present invention provide a server power supply device, so as to at least solve the problem in the related art of low power supply efficiency for a component to be powered in a server.

According to some embodiments of the present invention, a server power supply device is provided, which includes a power supply and an energy storage device.

The power supply is provided with power supply ports, the energy storage device is provided with a charging port and a discharging port, one of the power supply ports is connected to the charging port, an other of the power supply ports is further configured to connect to an electrical energy input port of a server motherboard to be powered, and the discharging port is configured to connect to a component to be powered deployed on the server motherboard.

The power supply is configured to supply power to the component to be powered through the electrical energy input port and charge the energy storage device.

The energy storage device is configured to, in a case where a target component in a target operating state is present in the component to be powered, continuously supply power to the target component according to a deficit of electrical energy supply of the target component in the target operating state, where an electrical energy demand quantity of the target component in the target operating state is greater than an electrical energy supply quantity of the power supply to the target component.

In some embodiments, the energy storage device includes an energy storage component configuration board and a plurality of energy storage components, where the energy storage component configuration board is provided with the charging port and a plurality of sub-discharging ports, the plurality of energy storage components and the plurality of sub-discharging ports are disposed in a one-to-one correspondence, a first end of each of the plurality of energy storage components is connected with the charging port, a second end of the each of the plurality of energy storage components is connected with a corresponding sub-discharging port, each of the plurality of sub-discharging ports is configured to connect with a power receiving port of the component to be powered on the server motherboard, and the discharging port includes the plurality of sub-discharging ports.

In some embodiments, a first slot configured to connect the plurality of energy storage components is deployed on the energy storage component configuration board, a first end of the first slot is connected to the charging port, a second end of the first slot is connected with the sub-discharging ports, and the each of the plurality of energy storage components is inserted into the first slot in a plug-in manner.

In some embodiments, the first slot includes a plurality of first sub-slots, where the plurality of first sub-slots are connected in series, and each of the plurality of first sub-slots is configured to connect with one of the plurality of energy storage components.

In some embodiments, each of the plurality of energy storage components includes a plurality of energy storage units which are sequentially connected in series.

In some embodiments, each of the plurality of energy storage units includes a solid-state electrolytic capacitor.

In some embodiments, each of the plurality of energy storage units includes a supercapacitor and a balancing resistor which are connected in parallel.

In some embodiments, the each of the plurality of energy storage components includes a plurality of energy storage units and a first controller, where the plurality of energy storage units have different electrical energy capacities, the plurality of energy storage units are connected in parallel, and the first controller is connected with each of the plurality of energy storage units.

The first controller is configured to control a target energy storage unit among the plurality of energy storage units, which matches a state type of the target operating state, to be in a state of supplying power to the target component.

In some embodiments, the first controller is configured to, in a case where a power supply quantity of the power supply to the target component does not meet the electrical energy demand quantity of the target component, select, from the plurality of energy storage units having different electrical energy capacities, the target energy storage unit which meets a remaining capacity required by the target component to supply power to the target component.

In some embodiments, the each of the plurality of energy storage unit includes a capacitor and a first control switch, where the first control switch is connected to a first power supply link between the capacitor and the sub-discharging port, and the first control switch is further connected with the first controller.

The first controller is configured to adjust a closed state of the first control switch.

The first control switch is configured to adjust an on-off state of the first power supply link.

In some embodiments, the first controller is further configured to predict power supply demand information of the component to be powered in a future time period according to operational mode information of the component to be powered before a current moment; in a case where the power supply demand information indicates that the component to be powered requires an use of the target energy storage unit currently to be charged for power supply, obtain a current power supply state of the power supply to the server motherboard; and in a case where the power supply state indicates that a remaining electrical energy supply quantity of the power supply is less than a target electrical energy quantity, select, from other energy storage units of the plurality of energy storage units and according to an electrical energy demand quantity of the target energy storage unit, a candidate energy storage unit configured to charge the target energy storage unit, and control the candidate energy storage unit to charge the target energy storage unit by controlling a closure of the first control switches in the target energy storage unit and the candidate energy storage unit.

In some embodiments, the each of the plurality of energy storage units includes a capacitor and a first signal collector, where the first signal collector is connected to a first power supply link between the capacitor and the sub-discharging port, and the first signal collector is further connected with the first controller.

The first signal collector is configured to collect discharge information of the capacitor and send the discharge information to the first controller.

The first controller is configured to, in a case where it is determined that the discharge information indicates that the capacitor is in a discharged state, detect power supply information of the power supply to the server motherboard; and in a case where the power supply information is configured to indicate that an electrical energy demand quantity of the server motherboard is less than an electrical energy supply quantity of the power supply, control the power supply to charge the capacitor.

In some embodiments, the energy storage device includes an adapter board and an energy storage component, where the adapter board is provided with the charging port, the discharging port, and a connection link, the charging port and the discharging port are connected through the connection link, the power supply is configured to supply power to the electrical energy input port through the connection link, and the energy storage component is bridged to the connection link.

In some embodiments, the adapter board is provided with a second slot configured to connect the energy storage component, a first end of the second slot is connected with the charging port, a second end of the second slot is connected with the discharging port, and the energy storage component is connected with the second slot in a plug-in manner.

In some embodiments, the energy storage component includes a plurality of energy storage units which are sequentially connected in series.

In some embodiments, the energy storage unit includes a supercapacitor and a balancing resistor which are connected in parallel.

In some embodiments, the energy storage unit includes a solid-state electrolytic capacitor.

In some embodiments, the energy storage component includes a plurality of energy storage units and a second controller, where the plurality of energy storage units have different electrical energy capacities, the plurality of energy storage units are connected in parallel, and the second controller is connected with each of the plurality of energy storage units.

The second controller is configured to control a target energy storage unit among the plurality of energy storage units, which matches a state type of the target operating state, to be in a state of supplying power to the target component.

In some embodiments, the each of the plurality of energy storage unit includes a capacitor and a second control switch, where the second control switch is connected to a second power supply link between the capacitor and the discharging port, and the second control switch is further connected with the second controller.

The second controller is configured to adjust a closed state of the second control switch.

The second control switch is configured to adjust an on-off state of the second power supply link.

In some embodiments, the each of the plurality of energy storage units includes a capacitor and a second signal collector, where the second signal collector is connected to a second power supply link between the capacitor and the discharging port, and the second signal collector is further connected with the second controller.

The second signal collector is configured to collect discharge information of the capacitor and send the discharge information to the second controller.

The second controller is configured to, when it is determined that the discharge information indicates that the capacitor is in a discharged state, detect power supply information of the power supply to the server motherboard; and in a case where the power supply information is configured to indicate that an electrical energy demand quantity of the server motherboard is less than the electrical energy supply quantity of the power supply, control the power supply to charge the capacitor.

Through the present invention, the server power supply device is provided with the power supply and the energy storage device, the power supply is provided with the power supply port, the energy storage device is provided with the charging port and the discharging port, and the power supply port of the power supply is connected with the electrical energy input port of the server motherboard to be powered, so that the power supply may charge the component to be powered deployed on the server motherboard. The charging port of the energy storage device is connected with the power supply port of the power supply, and the discharging port of the energy storage device is connected with the component to be powered deployed on the server motherboard, so that the power supply may charge the energy storage device, and in a case where a power supply demand quantity of a device to be powered exceeds the electrical energy supply quantity of the power supply, the energy storage device may supply power to the component to be powered together with the power supply, so as to provide partial electrical energy that the power supply cannot supply for the component to be powered, thereby meeting the power supply demand of the component to be powered under peak load conditions during overclocking, and enabling the component to be powered to operate normally in this operational mode. Therefore, the problem in the related art of low power supply efficiency of the component to be powered in the server may be solved, thereby achieving the effect of improving the power supply efficiency of the component to be powered in the server.

**Brief Description of the Drawings**

Fig. 1 is a first schematic diagram of a server power supply device according to some embodiments of the present invention.

Fig. 2 is a schematic diagram of an optional energy storage connection according to some embodiments of the present invention.

Fig. 3 is a first schematic diagram of a controller controlling power supply of an energy storage unit according to some embodiments of the present invention.

Fig. 4 is a second schematic diagram of a controller controlling power supply of an energy storage unit according to some embodiments of the present invention.

Fig. 5 is a second schematic diagram of a server power supply device according to some embodiments of the present invention.

Fig. 6 is a schematic diagram of an energy storage component according to some embodiment of the present invention.

Fig. 7 is a third schematic diagram of a controller controlling power supply of an energy storage unit according to some embodiments of the present invention.

Fig. 8 is a fourth schematic diagram of a controller controlling power supply of an energy storage unit according to some embodiments of the present invention.

Fig. 9 is a schematic diagram of an capacitor board according to some embodiments of the present invention.

Fig. 10 is an equivalent circuit diagram of an supercapacitor board according to some embodiments of the present invention.

## Detailed Description of the Embodiments

Embodiments of the present invention are described below with reference to the drawings and in conjunction with the embodiments in detail.

It is to be noted that the terms "first", "second" and the like in the specification, claims and the above drawings of the present invention are used for distinguishing similar objects rather than describing a specific sequence or a precedence order.

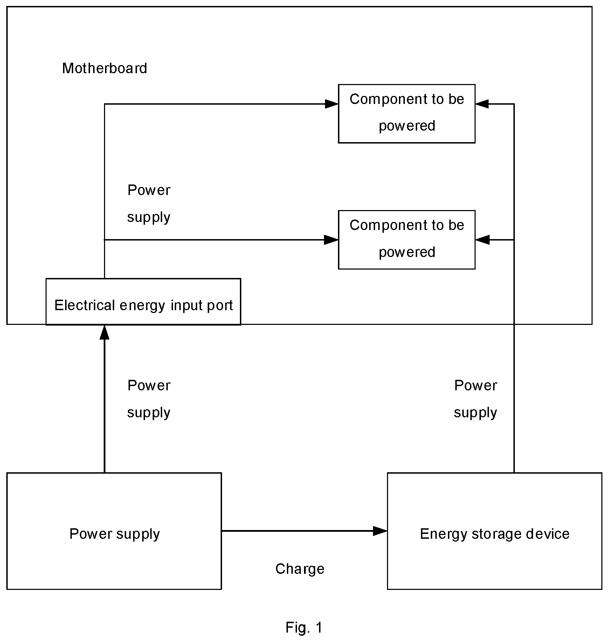

In some embodiments, a server power supply device is provided. Fig. 1 is a first schematic diagram of a server power supply device according to some embodiments of the present invention. As shown in Fig. 1, the device includes a power supply and an energy storage device.

The power supply is provided with power supply ports, the energy storage device is provided with a charging port and a discharging port, one of the power supply ports is connected to the charging port, an other of the power supply ports is further configured to connect to an electrical energy input port of a server motherboard to be powered, and the discharging port is configured to connect to a component to be powered deployed on the server motherboard.

The power supply is configured to supply power to the component be powered through the electrical energy input port and charge the energy storage device.

The energy storage device is configured to, in a case where a target component in a target operating state is present in the component to be powered, continuously supply power to the target component according to a deficit of electrical energy supply of the target component in the target operating state, where an electrical energy demand quantity of the target component in the target operating state is greater than an electrical energy supply quantity of the power supply to the target component.

Through the above content, the server power supply device is provided with the power supply and the energy storage device, the power supply is provided with the power supply port, the energy storage device is provided with the charging port and the discharging port, and the power supply port of the power supply is connected with the electrical energy input port of the server motherboard to be powered, so that the power supply can charge the component to be powered deployed on the server motherboard. The charging port of the energy storage device is connected with the power supply port of the power supply, and the discharging port of the energy storage device is connected with the component to be powered deployed on the server motherboard, so that the power supply may charge the energy storage device, and when a power supply demand quantity of a device to be powered exceeds the electrical energy supply quantity of the power supply, the energy storage device may supply power to the component to be powered together with the power supply, so as to provide partial electrical energy that the power supply cannot supply for the component to be powered, thereby meeting the power supply demand of the component to be powered under peak load conditions during overclocking, and enabling the component to be powered to operate normally in this operational mode. Therefore, the problem in the related art of low power supply efficiency of the component to be powered in a server may be solved, thereby achieving the effect of improving the power supply efficiency of the component to be powered in the server.

In some embodiments of the present invention, the power supply is configured to charge the component to be powered deployed on the server motherboard, and the power supply may be, but is not limited to, a Power Supply Unit (PSU), a lithium-ion battery, an embedded system power supply, etc., which is not limited in this solution.

In some embodiments of the present invention, the above server power supply device is provided with the energy storage device for storing electrical energy on the basis of an original power supply, and supplies power to the energy storage device through the power supply in a case where the server motherboard has no power supply demand, so as to meet the energy storage demand of the energy storage device, and charges the component to be powered when the power supply is insufficient to provide sufficient power for the component to be powered, thereby providing electrical energy exceeding the maximum load of the power supply. In this method, an external energy storage device is added without changing the design of the original power supply, thereby increasing the power supply quantity of the server power supply device to the server, and meeting the power supply demand of the server during overclocking peak loads. The energy storage device may be, but is not limited to, a capacitor, a supercapacitor, an energy storage battery (such as a lithium-ion battery and an alkaline battery), etc., which is not limited in this solution.

In some embodiments of the present invention, the component to be powered is a component required to operate during service processing of the server, and the component to be powered may be, but is not limited to, a processor, such as a Graphics Processing Unit (GPU), a Central Processing Unit (CPU), a Data Processing Unit (DPU), etc., and may also be a storage device (such as a hard disk drive and a solid state hard disk), an expansion card (such as a graphics card, an Redundant Array of Independent Disks (RAID) card, and a Host Bus Adapter (HBA) card), and the like, which is not limited in this solution.

In some embodiments of the present invention, the target operating state is an operating state in which the component to be powered is activated as required by a service to be processed by the server. Compared with the normal operating state of the component, the power supply demand of the component to be powered in the target operating state is larger and the duration is shorter, which exceeds the maximum electrical energy that the power supply can provide. For example, taking the target component as a GPU as an example, the target operating state may be, but is not limited to, an overclocking operating state. At this time, the peak load Electric Design Peak Power (EDPp) of the GPU is 155% of the maximum load of the power supply, and the duration is 200 us, which exceeds the maximum electrical energy supply quantity that the power supply can provide.

In some embodiments of the present invention, the server motherboard is provided with the component to be powered and the electrical energy input port, and the server motherboard is provided with a connecting line connecting the electrical energy input port and the component to be powered, so that the electrical energy input by the electrical energy input port can be transmitted to the component to be powered through the line, thereby meeting the power supply demand of the component to be powered. In order to meet the power supply demand of the energy storage device for the component to be powered on the server motherboard, the discharging port of the energy storage device may be connected with the electrical energy input port on the server motherboard to achieve a power supply connection with the component to be powered, thereby achieving the power supply demand of the energy storage device for all the components to be powered connected with the electrical energy input port. Alternatively, a connection slot (such as utilizing a slot space of a Peripheral Component Interconnect Express (PCIe) (a high-speed serial computer expansion bus standard) function expansion card) is expanded on the server motherboard for the device to be powered, and the discharging port of the energy storage device may be connected with the connection slot of the corresponding component to be powered through the connecting line, so as to supply power to the connected component to be powered. In this method, a targeted connection between the component to be powered in the target operating state and the energy storage device may be achieved according to the operating condition of the component to be powered, thereby ensuring the power supply demand of the component to be powered under peak load models.

In some embodiments, the energy storage device includes an energy storage component configuration board and a plurality of energy storage components, where the energy storage component configuration board is provided with the charging port and a plurality of sub-discharging ports, the plurality of energy storage components and the plurality of sub-discharging ports are disposed in a one-to-one correspondence, a first end of each of the plurality of energy storage components is connected with the charging port, a second end of the each of the plurality of energy storage components is connected with a corresponding sub-discharging port, each of the plurality of sub-discharging ports is configured to connect with a power receiving port of the component to be powered on the server motherboard, and the discharging port includes the plurality of sub-discharging ports.

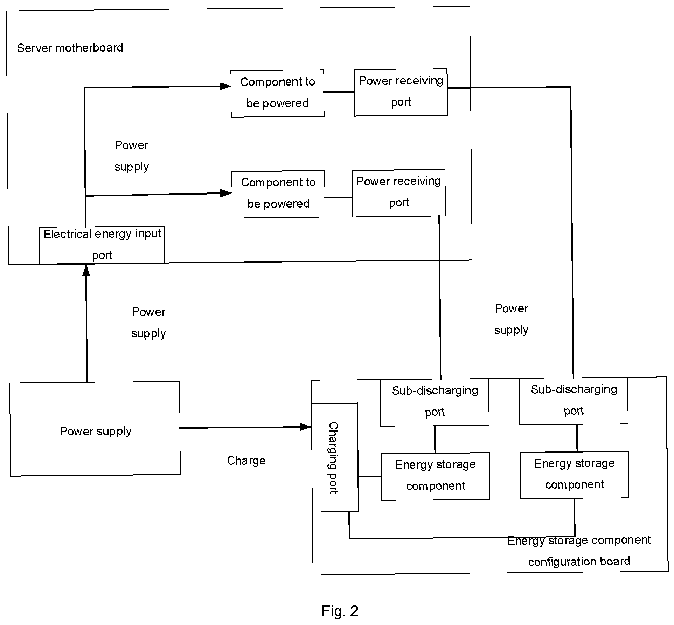

In some embodiments of the present invention, the energy storage component configuration board is a component connected outside a connection link between the power supply and the electrical energy input port on the server motherboard, and the energy storage component configuration board is configured to configure the energy storage component, so as to connect the energy storage component to the power receiving port (the power receiving port is a connection port extended for the component to be powered on the server motherboard, and may directly supply power to the component to be powered through the connection port) of the specific component to be powered on the server motherboard, thereby achieving targeted power supply to the component to be powered through the external energy storage component. That is, a connection relationship between the sub-discharging port on the energy storage component configuration board and the power receiving port of the component to be powered on the server motherboard may be adjusted according to the power supply demand of the component to be powered on the server motherboard. Fig. 2 is a schematic diagram of an optional energy storage connection according to an embodiment of the present invention. As shown in Fig. 2, the plurality of energy storage components (only two are shown in the figure) are disposed on the energy storage component configuration board. The energy storage component configuration board is provided with the charging port and the sub-discharging port corresponding to each of the energy storage components. In addition to the electrical energy input port connected with each of the components to be powered, the server motherboard is further provided with the power receiving port for each of the components to be powered, so that targeted power supply for the component to be powered in the target operating state is achieved by connecting the sub-discharging port to the corresponding power receiving port of the component to be powered.

In some embodiments of the present invention, the energy storage component is configured to store electrical energy, and the energy storage component may include, but is not limited to, an electric heater, a supercapacitor, an inductor capacitor (such as a solid-state electrolytic capacitor and a supercapacitor), a lithium battery, and the like, which is not limited in this solution.

In some embodiments of the present invention, the energy storage component configuration board is provided with the charging port and the plurality of sub-discharging ports, and each of the sub-discharging port is provided with a standard electrical interface and connection mechanism to ensure one-to-one mating with the power receiving port on the component to be powered, thereby achieving accurate electrical energy transmission, and these ports also support a hot-swap function, which facilitates maintenance and upgrade without interrupting server operation.

In some embodiments of the present invention, in order to achieve the connection demand of the energy storage component on the energy storage component configuration board, the energy storage component configuration board may be provided with, but is not limited to, a first slot configured to connect the plurality of energy storage components, a first end of the first slot is connected with the charging port, and a second end of the first slot is connected with the discharging port, so that the energy storage component is connected with the energy storage component configuration board in a plug-in manner, thereby achieving rapid replacement of the energy storage component on the energy storage component configuration board. Further, the first slot may include, but is not limited to, a plurality of first sub-slots connected in series, and each of the plurality of first sub-slots may be connected with one of the plurality of energy storage components, so that the energy storage capacity when supplying power to the corresponding component to be powered may be increased according to the number of energy storage components connected as required.

In some embodiments of the present invention, the energy storage component may be, but is not limited to, an energy storage component formed by connecting a plurality of energy storage units in series, and in use, the energy storage capacity of the energy storage component may be adjusted by adjusting the number of energy storage units connected in series and energy storage parameters of the energy storage units connected in series.

Through the above configuration, the energy storage component configuration board is provided with the charging port and the plurality of sub-discharging ports, and a second end of each of the energy storage devices is connected with the corresponding sub-discharging port, so that the sub-discharging port is connected with the power receiving port of the component to be powered with the demand of the target operating state on the server motherboard according to the operation demand of the component to be powered, thereby achieving targeted power supply to the device to be powered with the peak power supply demand and improving the power supply efficiency of the component to be powered.

In some embodiments, each of the plurality of energy storage components includes a plurality of energy storage units which are sequentially connected in series.

In some embodiments of the present invention, the energy storage unit is a component used by the energy storage component during operation. The energy storage unit may include, but is not limited to, a capacitor (such as a solid-state electrolytic capacitor and a supercapacitor), an energy storage battery, and the like, which is not limited in this solution.

Through the above content, by connecting the plurality of energy storage units in series, the electrical energy capacity of the energy storage component is increased, so that the electrical energy capacity of the energy storage component may be quickly adjusted by adjusting the number of energy storage unit connected in series.

In some embodiments, each of the plurality of energy storage units includes a solid-state electrolytic capacitor.

In some embodiments of the present invention, the solid-state electrolytic capacitor is a capacitor based on a solid electrolyte, which has the characteristics of high reliability, long life, low equivalent series resistance, and strong stability. The solid-state electrolytic capacitor may be, but is not limited to, an organic semiconductor aluminum electrolytic capacitor, a polymer conductor aluminum electrolytic capacitor, etc., and may also be a supercapacitor board composed of solid electrolyte, which is not limited in this solution.

In some embodiments, each of the plurality of the energy storage unit includes a supercapacitor and a balancing resistor which are connected in parallel.

In some embodiments, the each of the plurality of the energy storage components includes a plurality of energy storage units and a first controller, where the plurality of energy storage units have different electrical energy capacities, the plurality of energy storage units are connected in parallel, and the first controller is connected with each of the energy storage units.

The first controller is configured to control a target energy storage unit among the plurality of energy storage units, which matches a state type of the target operating state, to be in a state of supplying power to the target component.

In some embodiments of the present invention, the first controller is configured to select, from the plurality of energy storage units having different electrical energy capacities and according to the remaining capacity required by the target component in a case where the power supply quantity of the power supply is insufficient, the energy storage unit that meets the supply of the remaining capacity required by the target component to supply power to the target component. The first controller may be, but is not limited to, a CPU, a MicroController Unit (MCU), a Digital Signal Processor (DSP), etc., which is not limited in this solution.

In some embodiments of the present invention, the peak electrical energy demand quantity of the component to be powered varies under different state types of the target operating state, for example, taking the component to be powered as a GPU as an example, the GPU may have a plurality of state types under the overclocking model operation, and the peak electrical energy demand quantity of the server varies under different state types, for example, the peak electrical energy demand quantity under the first state type is 110% of the total power supply quantity of the power supply, the peak power demand under the second state type is 130% of the total power supply quantity of the power supply, and the peak power demand under the third state type is 150% of the total power supply quantity of the power supply.

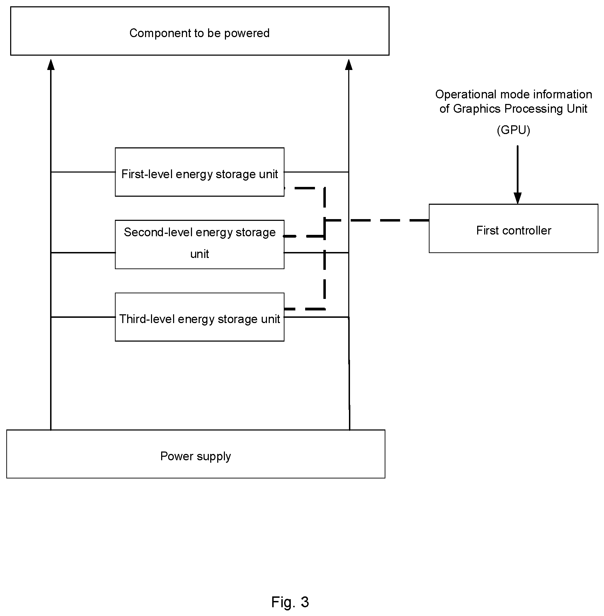

In some embodiments of the present invention, in order to meet the power supply demand of the component to be powered on the server motherboard under the target operating states of different state types, the plurality of energy storage units connected in parallel may be configured, and the different energy storage units have different electrical energy capacities, so that the energy storage unit connected to the component to be powered may be controlled, thereby selecting a suitable energy storage unit for power supply according to the power supply demand of the component to be powered, and improving the power supply efficiency of the energy storage unit to the power supply component. Fig. 3 is a first schematic diagram of a controller controlling power supply of an energy storage unit according to some embodiments of the present invention. As shown in Fig. 3, a multi-level energy storage device structure is constructed by connecting a plurality of units in parallel, the energy storage units of different levels have different electrical energy capacities, one end of the energy storage unit is connected with the charging port of the power supply while the other end thereof is connected with the power receiving port of the component to be powered, and the first controller is connected with each of the capacitors. Since the target component has different electrical energy demand quantities under the target operating state, and the energy storage units having different energy capacities also have different charging speeds, the control logic for controlling the energy storage unit to supply power to the target component may be set in the first controller. That is, the controller may select, from the energy storage units having different electrical energy capacities and according to the operational mode information (i.e., the remaining capacity required by the GPU in a case where the power supply quantity of the power supply is insufficient) of the GPU (here, the GPU is taken as the target component an example).

Through the above configuration, a circuit structure of the multi-level energy storage unit is achieved by connecting the plurality of energy storage units having different electrical energy capacities in parallel, and further by connecting the first controller and the energy storage unit of each level, the power supply state of the energy storage unit of each level to the target component may be controlled, and then the energy storage unit of the corresponding level may be selected for power supply according to the power supply demand of the component to be powered, thereby improving the adaptability between the energy storage unit and the electrical energy demand of the component to be powered, avoiding the problem of poor charging time of the energy storage unit after using the high-level energy storage unit to supply power to a component with a low-level power supply demand, and improving the power supply efficiency of the component.

In some embodiments, the each of the plurality of energy storage unit includes a capacitor and a first control switch, where the first control switch is connected to a first power supply link between the capacitor and the sub-discharging port, and the first control switch is further connected with the first controller.

The first controller is configured to adjust a closed state of the first control switch.

The first control switch is configured to adjust an on-off state of the first power supply link.

In some embodiments of the present invention, the first control switch is a component configured to adjust the on-off state of the power supply link, and the first control switch may be, but is not limited to, an electronic switch, a Metal-Oxide-Semiconductor Field-Effect Transistor (MOSFET), etc., which is not limited in this solution.

According to the above content, the energy storage unit of each level is provided with the first control switch, and the controller controls the on-off state of the first control switch, so that the power supply state of the energy storage unit of the corresponding level to the power supply component is controlled, thereby improving the accuracy of control.

In some embodiments, the each of the plurality of energy storage units includes a capacitor and a first signal collector, where the first signal collector is connected to a first power supply link between the capacitor and the sub-discharging port, and the first signal collector is further connected with the first controller.

The first signal collector is configured to collect discharge information of the capacitor and send the discharge information to the first controller.

The first controller is configured to, in a case where it is determined that the discharge information indicates that the capacitor is in a discharged state, detect power supply information of the power supply to the server motherboard; and in a case where the power supply information is configured to indicate that an electrical energy demand quantity of the server motherboard is less than an electrical energy supply quantity of the power supply, control the power supply to charge the capacitor.

In some embodiments of the present invention, the first signal collector is configured to collect voltage changes on the capacitor link in the process of indicating the capacitor, and the first signal collector may be, but is not limited to, a power amplifier, a voltage sensor, etc., which is not limited in this solution.

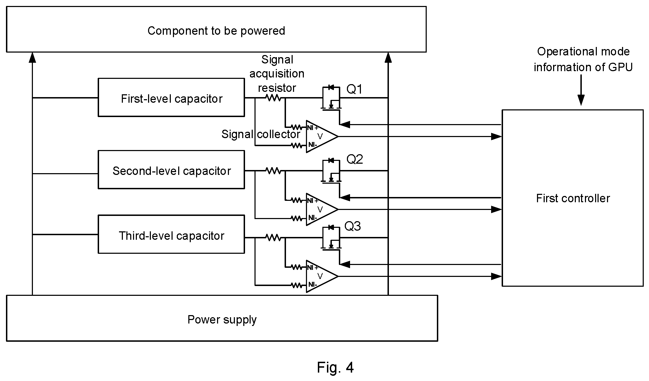

In some embodiments of the present invention, Fig. 4 is a second schematic diagram of a controller controlling power supply of an energy storage unit according to some embodiments of the present invention. As shown in Fig. 4, the energy storage unit of each level includes capacitors (a first-level capacitor, a second-level capacitor, and a third-level capacitor in Fig. 4) and first control switches (Q1, Q2, and Q3 in Fig. 4, and the control switch in the figure is an MOSFET). The switches Q1, Q2, and Q3 are connected with the power supply link between the corresponding capacitor and the corresponding sub-discharging port deployed on the energy storage component configuration board. The switches Q1, Q2, and Q3 are further connected with the first controller, and the first controller is configured to adjust the closed state of the switches Q1, Q2, and Q3. When the controller selects to call the first-level capacitor to supply power to the GPU (here, the GPU is taken as the target component as an example), the control switch Q1 is closed and the control switches Q2 and Q3 are disconnected. Similarly, when the controller selects to call the second-level capacitor to supply power to the GPU, the control switch Q2 is closed and the control switches Q1 and Q3 are disconnected. After the power supply is completed, the first controller may also detect a charging state of the capacitor in the energy storage unit of the corresponding level through a signal acquisition resistor and a signal collector in the energy storage unit of the corresponding level, the first controller collects the voltage change state at both ends of the signal acquisition resistor through the signal collector, thereby outputting a voltage signal for indicating the discharging state of the capacitor, and then determines a charging and discharging state of the corresponding capacitor according to the voltage signal. After the capacitor is in the discharging state, the first control switch in a charging unit of the corresponding level is controlled to be in a closed state, and the first control switches in the energy storage units of other levels are controlled to be in a disconnected state, thereby controlling the power supply to charge the capacitor.

In the above embodiments of the present invention, in order to optimize the charging efficiency of the capacitor, the first controller may predict, in a case of detecting that the capacitor requires charging, the power supply demand information of the component to be powered in a future time period according to operational mode information of the component to be powered before a current moment, then obtain, in a case where the power supply demand information indicates that the component to be powered requires the use of the target capacitor currently to be charged for power supply, a current power supply state of the power supply to the server motherboard, and supply, in a case where the power supply state indicates that the remaining electrical energy supply quantity of the power supply of the server is less than a target electrical energy quantity, power to the target capacitor in the target energy storage unit by other energy storage units other than the target energy storage unit in the multi-level energy storage unit. Therefore, a candidate energy storage device configured to charge the target capacitor is selected from other energy storage units according to the electrical energy demand quantity of the target capacitor, and then the closure of the connection link between the target energy storage unit and the candidate energy storage unit is controlled by controlling the closure of the first control switches in the target energy storage unit and the candidate energy storage unit, so that the capacitor in the candidate energy storage device may charge the target capacitor. Through the above content, the first controller uses the historical power supply demand information of the component to be powered to predict the future power supply demand information of the component to be powered, so that after predicting that the target capacitor to be charged will be used to supply power to the component to be powered, the power supply state of the power supply is detected, and then in a case where the power supply is currently unable to charge the target capacitor, the target capacitor is charged by other energy storage units in the multi-level energy storage unit. On the one hand, the impact on the power supply of the server motherboard due to the charging of the target capacitor can be avoided. On the other hand, the target capacitor to be used can be charged by other energy storage units, thereby improving the timeliness of energy storage of the target capacitor and ensuring the power supply efficiency of the target capacitor to the component to be powered.

In some embodiments of the present invention, the controller may predict the power supply demand of the capacitor according to the operation mode information of the GPU. If the controller predicts that the first capacitor will soon be required to supply power to the component to be powered, but detects that the first capacitor is currently in a discharged state, and detects that there is no margin of electrical energy after a server power supply supplies power to the server motherboard, the controller detects the current discharge information of the second capacitor. When it is detected that the second capacitor is currently in a non-discharged state, the controller controls the second capacitor to charge the first capacitor, that is, the control switches Q1 and Q2 are closed and Q3 is disconnected. The first capacitor and the second capacitor form a closed loop, thereby controlling the second capacitor to charge the first capacitor.

According to the above configuration, in a case where the controller detects that the capacitor is in the discharged state, on the one hand, the server power supply may be controlled to charge the capacitor when the server power supply has a margin of electrical energy, and on the other hand, the capacitors may be controlled to charge each other when the server power supply has no margin of electrical energy, so that the power supply efficiency of the capacitor to the component to be powered may be improved and the service waiting may be avoided.

In some embodiments, the energy storage device includes an adapter board and an energy storage component, where the adapter board is provided with the charging port, the discharging port, and a connection link, the charging port and the discharging port are connected through the connection link, the power supply is configured to supply power to the electrical energy input port through the connection link, and the energy storage component is bridged to the connection link.

In some embodiments of the present invention, the energy storage device may be, but is not limited to, an adapter device connected between the power supply and the electrical energy input port of the server motherboard, i.e., an adapter board provided with the energy storage component, so that the energy storage device may achieve the connection between the power supply and the electrical energy input port on the server motherboard, thereby achieving the connection between the energy storage device and the power supply and the electrical energy input interface on the server motherboard, and avoiding additional occupation of the connection port on the server motherboard due to the connection of the energy storage device.

In some embodiments of the present invention, the energy storage component is configured to store electrical energy, and the energy storage component may include, but is not limited to, an electric heater, a supercapacitor, an inductor capacitor (such as a solid-state electrolytic capacitor and a supercapacitor), a lithium battery, etc., which is not limited in this solution.

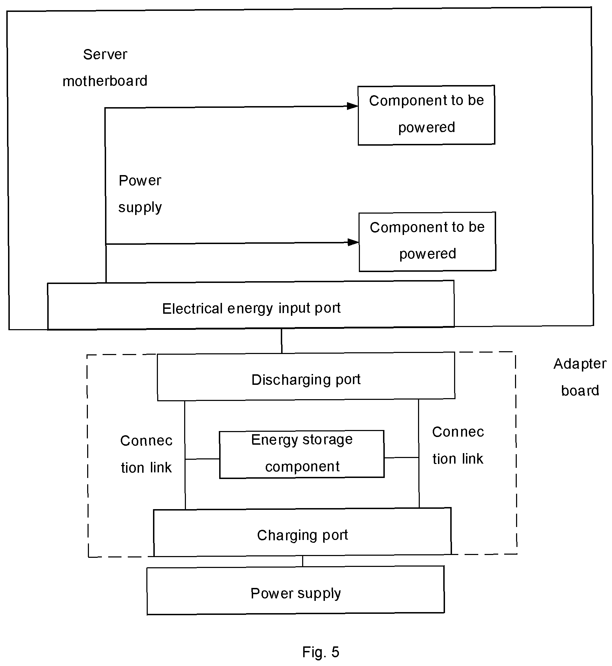

Fig. 5 is a second schematic diagram of a server power supply device according to some embodiments of the present invention. As shown in Fig. 5, the energy storage device is connected between the power supply and the electrical energy input port on the server motherboard. Therefore, on the one hand, the power supply can charge the energy storage device, and on the other hand, the power supply can also be connected to the electrical energy input port on the server motherboard through the energy storage device to achieve power supply to the server motherboard. At the same time, the energy storage device can also directly supply power to the electrical energy input port on the server motherboard. Further, the energy storage device includes an adapter board and an energy transmission component, where the adapter board is provided with a connection link connecting the charging port and the discharging port, the power supply is connected with the server motherboard through the connection link to supply power to the server motherboard, and the energy storage component is bridged to the connection link, so that the power supply may supply power to the server motherboard and the energy storage component through the connection link, and the energy storage component may also supply power to the motherboard through the connection link.

In some embodiments of the present invention, in order to achieve the connection demand of the energy storage component on the adapter board, the adapter board may be provided with, but is not limited to, a second slot configured to connect the energy storage component, a first end of the second slot is connected with the charging port, and a second end of the second slot is connected with the discharging port, so that the energy storage component is connected with the adapter board in a plug-in manner, thereby achieving rapid replacement of the energy storage component on the adapter board. Further, the second slot may include, but is not limited to, a plurality of second sub-slots connected in series, and each of the second sub-slots may be connected to one of the energy storage components, so that the energy storage capacity when supplying power to the corresponding component to be powered may be increased according to the number of energy storage components connected as required.

Through the above embodiment, by configuring the energy storage device as the adapter device connected between the power supply and the electrical energy input port of the server motherboard, on the one hand, the power supply can charge the energy storage device, and on the other hand, the power supply can also be connected to the electrical energy input port on the server motherboard through the energy storage device to achieve power supply to the server motherboard. At the same time, the energy storage device can also directly supply power to the electrical energy input port on the server motherboard. Therefore, the problem of an interface on the server motherboard being occupied by the external energy storage device is effectively solved, and the connection efficiency of the energy storage device is improved.

In some embodiments, the energy storage component includes a plurality of energy storage units which are sequentially connected in series.

In some embodiments, the energy storage unit includes a supercapacitor and a balancing resistor which are connected in parallel.

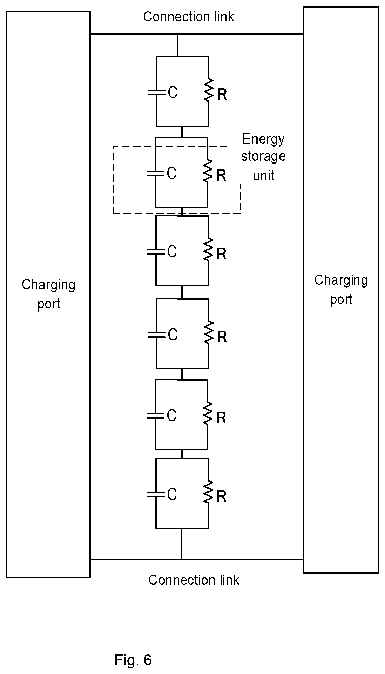

In some embodiments of the present invention, Fig. 6 is a schematic diagram of an energy storage component according to an embodiment of the present invention. As shown in Fig. 6, the energy storage component includes a plurality of energy storage units, where the plurality of energy storage units are connected in series, and each of the energy storage units includes a supercapacitor (device C in the figure) and a balancing resistor (device R in the figure) which are connected in parallel.

In some embodiments, the energy storage unit includes a solid-state electrolytic capacitor.

In some embodiments of the present invention, the solid-state electrolytic capacitor is a capacitor based on a solid electrolyte, which has the characteristics of high reliability, long life, low equivalent series resistance, and strong stability. The solid-state electrolytic capacitor may be, but is not limited to, an organic semiconductor aluminum electrolytic capacitor, a polymer conductor aluminum electrolytic capacitor, etc., and may also be a supercapacitor plate composed of solid electrolyte, which is not limited in this solution.

In some embodiment, the energy storage component includes a plurality of energy storage units and a second controller, where the plurality of energy storage units have different electrical energy capacities, the plurality of energy storage units are connected in parallel, and the second controller is connected with each of the plurality of energy storage units.

The second controller is configured to control a target energy storage unit among the plurality of energy storage units, which matches a state type of the target operating state , to be in a state of supplying power to the target component.

In some embodiments of the present invention, the second controller is configured to select, from the plurality of energy storage units having different electrical energy capacities and according to the remaining capacity required by the target component when the power supply quantity of the power supply is insufficient, the energy storage unit that meets the supply of the remaining capacity required by the target component to supply power to the target component. The second controller may be, but is not limited to, a CPU, an MCU, a DSP, etc., which is not limited in this solution.

In some embodiments of the present invention, the peak electrical energy demand quantity of the component to be powered varies under different state types of the target operating state, for example, taking the component to be powered as a GPU as an example, the GPU may have a plurality of state types under the overclocking model operation, and the peak electrical energy demand quantity of the server varies under different state types, for example, the peak electrical energy demand quantity under the first state type is 110% of the total power supply quantity of the power supply, the peak power demand under the second state type is 130% of the total power supply quantity of the power supply, and the peak power demand under the third state type is 150% of the total power supply quantity of the power supply.

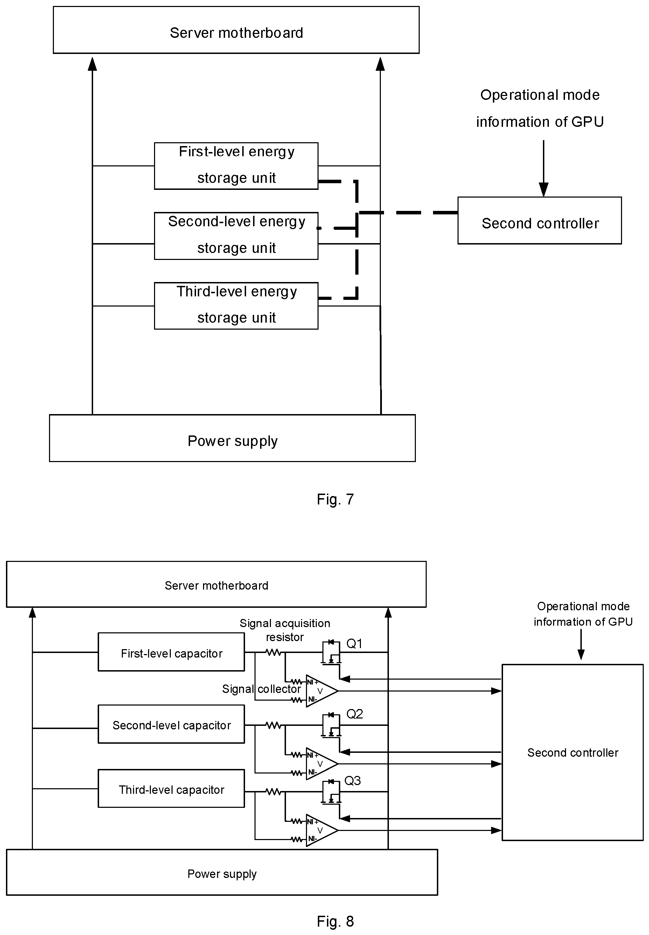

In some embodiments, in the embodiment of the present invention, in order to meet the power supply demand of the component to be powered on the server motherboard under the target operating states of different state types, the plurality of energy storage units connected in parallel may be configured, and the different energy storage units have different electrical energy capacities, so that the energy storage unit connected to the component to be powered may be controlled, thereby selecting a suitable energy storage unit for power supply according to the power supply demand of the component to be powered, and improving the power supply efficiency of the energy storage unit to the power supply component. Fig. 7 is a first schematic diagram of a controller controlling power supply of an energy storage unit according to an embodiment of the present invention. As shown in Fig. 7, a multi-level energy storage device structure is constructed by connecting a plurality of units in parallel, the energy storage units of different levels have different electrical energy capacities, one end of the energy storage unit is connected with the charging port of the power supply while the other end thereof is connected with the power receiving port of the component to be powered, and the second controller is connected to each of the capacitors. Since the target component has different electrical energy demand quantities under the target operating state, and the energy storage units having different energy capacities also have different charging speeds, the control logic for controlling the energy storage unit to supply power to the target component may be set in the second controller. That is, the controller may select, from the energy storage units having different electrical energy capacities and according to the operational mode information (i.e., the remaining capacity required by the GPU when the power supply quantity of the power supply is insufficient) of the GPU (here, the GPU is taken as the target component an example).

Through the above configuration, a circuit structure of the multi-level energy storage unit is achieved by connecting the plurality of energy storage units having different electrical energy capacities in parallel, and further by connecting the second controller and the energy storage unit of each level, the power supply state of the energy storage unit of each level to the target component may be controlled, and then the energy storage unit of the corresponding level may be selected for power supply according to the power supply demand of the component to be powered, thereby improving the adaptability between the energy storage unit and the electrical energy demand of the component to be powered, avoiding the problem of poor charging time of the energy storage unit after using the high-level energy storage unit to supply power to a component with a low-level power supply demand, and improving the power supply efficiency of the component.

In some embodiments, the each of the plurality of energy storage unit includes a capacitor and a second control switch, where the second control switch is connected to a second power supply link between the capacitor and the discharging port, and the second control switch is further connected with the second controller.

The second controller is configured to adjust a closed state of the second control switch.

The second control switch is configured to adjust an on-off state of the second power supply link.

In some embodiments of the present invention, the second control switch is a component configured to adjust the on-off state of the power supply link, and the second control switch may be, but is not limited to, an electronic switch, an MOSFET, etc., which is not limited in this solution.

According to the above content, the energy storage unit of each level is provided with the second control switch, and the controller controls the on-off state of the second control switch, so that the power supply state of the energy storage unit of the corresponding level to the power supply component is controlled, thereby improving the accuracy of control.

In some embodiments, each of the plurality of energy storage unit includes a capacitor and a second signal collector, where the second signal collector is connected to a second power supply link between the capacitor and the discharging port, and the second signal collector is further connected with the second controller.

The second signal collector is configured to collect discharge information of the capacitor and send the discharge information to the second controller.

The second controller is configured to, in a case where it is determined that the discharge information indicates that the capacitor is in a discharged state, detect power supply information of the power supply to the server motherboard; and in a case where the power supply information is configured to indicate that an electrical energy demand quantity of the server motherboard is less than the electrical energy supply quantity of the power supply, control the power supply to charge the capacitor.

In some embodiments of the present invention, the second signal collector is configured to collect voltage changes on the capacitor link in the process of indicating the capacitor, and the second signal collector may be, but is not limited to, a power amplifier, a voltage sensor, etc., which is not limited in this solution.

In some embodiments of the present invention, Fig. 8 is a fourth schematic diagram of a controller controlling power supply of an energy storage unit according to some embodiments of the present invention. As shown in Fig. 8, the energy storage unit of each level includes capacitors (a first-level capacitor, a second-level capacitor, and a third-level capacitor in Fig. 8) and second control switches (Q1, Q2, and Q3 in Fig. 8, and the control switch in the figure is an MOSFET). The switches Q1, Q2, and Q3 are connected with the power supply link between the corresponding capacitor and the corresponding sub-discharging port deployed on the energy storage component configuration board. The switches Q1, Q2, and Q3 are further connected with the second controller, and the second controller is configured to adjust the closed state of the switches Q1, Q2, and Q3. When the controller selects to call the first-level capacitor to supply power to the GPU (here, the GPU is taken as the target component as an example), the control switch Q1 is closed and the control switches Q2 and Q3 are disconnected. Similarly, when the controller selects to call the second-level capacitor to supply power to the GPU, the control switch Q2 is closed and the control switches Q1 and Q3 are disconnected. After the power supply is completed, the second controller may also detect a charging state of the capacitor in the energy storage unit of the corresponding level through a signal acquisition resistor and a signal collector in the energy storage unit of the corresponding level, the second controller collects the voltage change state at both ends of the signal acquisition resistor through the signal collector, thereby outputting a voltage signal for indicating the discharging state of the capacitor, and then determines a charging and discharging state of the corresponding capacitor according to the voltage signal. After the capacitor is in the discharging state, the second control switch in a charging unit of the corresponding level is controlled to be in a closed state, and the second control switches in the energy storage units of other levels are controlled to be in a disconnected state, thereby controlling the power supply to charge the capacitor.

In the above embodiment of the present invention, in order to optimize the charging efficiency of the capacitor, the second controller may predict, when detecting that the capacitor requires charging, the power supply demand information of the component to be powered in a future time period according to operational mode information of the component to be powered before a current moment, then obtain, when the power supply demand information indicates that the component to be powered requires the use of the target capacitor currently to be charged for power supply, a current power supply state of the power supply to the server motherboard, and supply, when the power supply state indicates that the remaining electrical energy supply quantity of the power supply of the server is less than a target electrical energy quantity, power to the target capacitor in the target energy storage unit by other energy storage units other than the target energy storage unit in the multi-level energy storage unit. Therefore, a candidate energy storage device configured to charge the target capacitor is selected from other energy storage units according to the electrical energy demand quantity of the target capacitor, and then the closure of the connection link between the target energy storage unit and the candidate energy storage unit is controlled by controlling the closure of the second control switches in the target energy storage unit and the candidate energy storage unit, so that the capacitor in the candidate energy storage device may charge the target capacitor. Through the above content, the second controller uses the historical power supply demand information of the component to be powered to predict the future power supply demand information of the component to be powered, so that after predicting that the target capacitor to be charged will be used to supply power to the component to be powered, the power supply state of the power supply is detected, and then when the power supply is currently unable to charge the target capacitor, the target capacitor is charged by other energy storage units in the multi-level energy storage unit. On the one hand, the impact on the power supply of the server motherboard due to the charging of the target capacitor can be avoided. On the other hand, the target capacitor to be used can be charged by other energy storage units, thereby improving the timeliness of energy storage of the target capacitor and ensuring the power supply efficiency of the target capacitor to the component to be powered.

In some embodiments of the present invention, the controller may predict the power supply demand of the capacitor according to the operation mode information of the GPU. If the controller predicts that the first capacitor will soon be required to supply power to the component to be powered, but detects that the first capacitor is currently in a discharged state, and detects that there is no margin of electrical energy after a server power supply supplies power to the server motherboard, the controller detects the current discharge information of the second capacitor. When it is detected that the second capacitor is currently in a non-discharged state, the controller controls the second capacitor to charge the first capacitor, that is, the control switches Q1 and Q2 are closed and Q3 is disconnected. The first capacitor and the second capacitor form a closed loop, thereby controlling the second capacitor to charge the first capacitor.

According to the above configuration, when the controller detects that the capacitor is in the discharged state, on the one hand, the server power supply may be controlled to charge the capacitor when the server power supply has a margin of electrical energy, and on the other hand, the capacitors may be controlled to charge each other when the server power supply has no margin of electrical energy, so that the power supply efficiency of the capacitor to the component to be powered may be improved and the service waiting may be avoided.

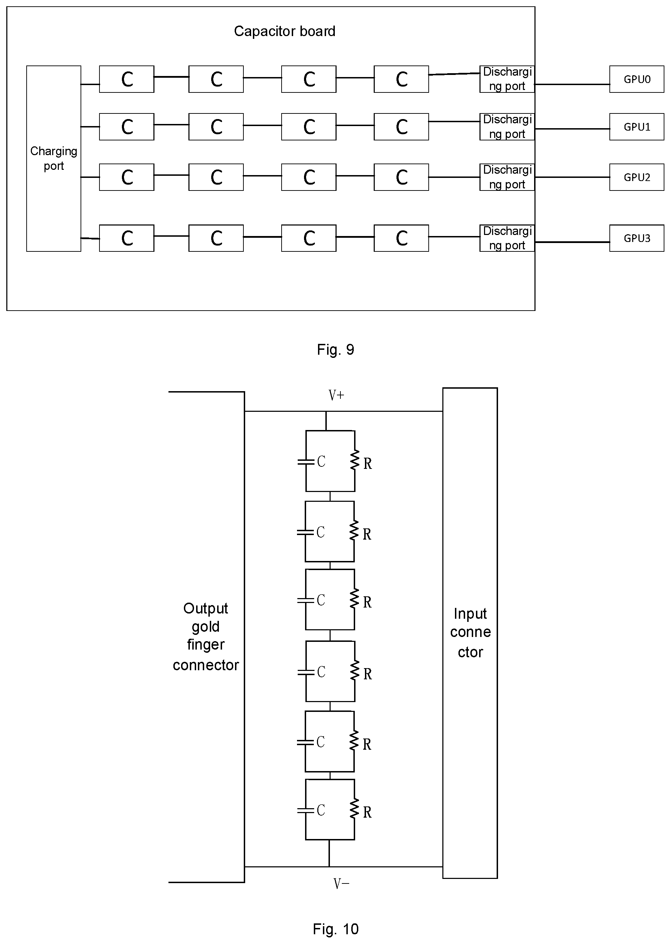

The peak load EDPp during overlocking of the GPU in the server can reach up to 155% of the maximum load of the PSU for 200 us, which raises concerns that the power supply may trigger OverCurrent Protection (OCP). This power supply supports OCP at approximately 110% of the maximum load of the PSU for 1 s, and the peak load capacity is approximately 140% for 100 us. In order to achieve the power supply demand of the peak load during overlocking of the GPU in the server, additional capacitors may be added to support the peak load EDPp during overlocking. The method is as follows: a capacitor board is designed to support the peak load EDPp during overlocking with large capacitors, it is necessary to design a supercapacitor board composed of thirty 1200 u and 16 v solid-state electrolytic capacitors, a capacitance value of which is about 1200 uF*30=36000 uF=0.036 F, and a 12 V power supply is introduced into the capacitor board and then connected to the GPU to support the EDPp function of the GPU. Fig. 9 is a schematic diagram of an optional capacitor board according to an embodiment of the present invention. As shown in Fig. 9, the capacitor board mainly performs energy storage and filtering for a 12 V power supply of four GPUs in a system to ensure normal power supply of the GPU under instantaneous heavy load. The capacitor board includes: 12 V input charging ports, four 12 V discharging ports (as shown in the figure above: C0\C1\C2\C3), and thirty 1200 uf and 16 v solid aluminum electrolytic capacitors (only sixteen are shown in the figure) which form a capacitor array. A connection relationship is that: the capacitor board receives 12 V power from the motherboard through four 2x4 power supply adapter wires, connected to the charging port of the motherboard), and after filtering and energy storage by the capacitor array, the capacitor board is connected to a GPU0\GPU1\GPU2\GPU3 power supply interface through another four 2x4 power supply adapter wires to supply power to the four GPUs.

The above method is that: the additional capacitor board is added to support the peak load EDPp during overlocking. This method may not affect the design of the PSU and the power supply cost. However, it is necessary to find a corresponding space inside the system for placement of the capacitor board, which is generally arranged in a slot space corresponding to a PCIe function expansion card. However, the slot space of the PCIe function expansion card may be occupied to affect the system function expansion, resulting in configuration limitation and insufficient system space, thereby affecting market competitiveness.

In order to optimize the above problems, a minimized supercapacitor board (which may support four 12 V GPUs) may be designed and directly combined with the PSU: six 220 mF/4.2 V supercapacitors are connected in series=220 mF/6=0.036 F voltage resistant 25.2 V. Six 10 K ohm/0402 balancing resistors are matched. The size of the supercapacitor board is 100 mm*28 mm*1.6 mm. The supercapacitor board has a PSU input connector and an output gold finger. The input connector is connected to the PSU, and an output gold finger connector is connected to the system motherboard. Fig. 10 is an equivalent circuit diagram of a supercapacitor board according to some embodiments of the present invention. As shown in Fig. 10, the input connector (PSU conn input) (i.e., the charging port) of the supercapacitor board is connected to the PSU, the output golden finger connector (i.e., the discharging port) is connected to the system motherboard, the input connector and the output golden finger connector are connected through the connection link, and the plurality of supercapacitors (six are shown in the figure, and C in the figure is the supercapacitor) and the plurality of balancing resistors (R in the figure is the balancing resistor) are connected in series and then bridged between the connection links (one supercapacitor and one balancing resistor are connected in parallel). An instantaneous EDPp capacitance value design is supported.

It is expected to design a 12.2 V supercapacitor a with 1300 W output that can support 197% of the new generation GPU for 200 uS. The required peak current Ipeak for the 1300 W EDPp curve is calculated: Ipeak=Pout/Vout*EDPp=1300W/12.2V*1.97=210A.

Capacitance value calculation:

A single instantaneous capacitance value design rising from 5 A to 210 A for 200 u Sec is supported. The allowable support voltage range is +/-7%. The supported voltage range is 12.8 V-11.6 V.
Supercapacitor calculation formula:

$$\mathrm{E=P(t)} * t = \frac{1}{2} C * \Delta V^2$$

$$=> 12.2V * (210A-5A) *200uF = 1/2 *C* (12.8^2 - 11.6^2)$$

=> C= 34166 uF =>36000 uF or 0.036 F supercapacitor.
Not exceed the maximum PSU capacitive load (1300W PSU Cap load Max is 50000uF).
Single board supports current analysis:

Supercapacitor power formula Q = I * t= C* dV.

Capacitor rated capacity; Q capacitance; dv: capacitor operating voltage difference; I: capacitor discharge current; t: capacitor discharge time; R: capacitor internal resistance.

Theoretical support current:

C: capacitance value V: capacitance voltage I = current during charging and discharging, the actual voltage difference of dV is 12.6 V-11. 4V.

$$Q = C * dV = 0.036F * (12.6\text{-}11.4) = 0.0432 \ C = 0.0432A \ . \ s\text{=}43.2mA \ .s.$$

In the actual situation, if it is required to support 200 us discharge current:

0.0432A . s =43.2mA . s ==> 43.2mA . s / 200us = 216A.

In the actual situation, if it is required to support 1 ms discharge current:

0.0432A . s = 43.2mA . s ==> 43.2mA . s / 1ms = 43.2 A.

In the actual situation, if it is required to support 50 ms discharge current:

0.0432A . s = 43.2 mA . s ==> 43.2mA . s / 50ms = 0.864A.

In the actual situation, if it is required to support 20 us discharge current:

0.0432A . s = 43.2mA . s ==> 43.2mA . s / 20us = 2160 A.

Through the above embodiment, expansion may be achieved by directly connecting the PSU and the motherboard, without occupying the slot space of the PCIe function expansion card, so as to avoid affecting the system function expansion, resulting in configuration limitation and insufficient system space, thereby affecting market competitiveness. The design is simple, with high stability under minimization, and does not affect the system layout space.

The specific examples in this embodiment may refer to the above embodiments and the examples described in the optional implementations, which will not be elaborated herein.

It is apparent that those skilled in the art should appreciate that the above modules and steps of the present invention may be implemented by a general-purpose computing apparatus, and they may be centralized in a single computing apparatus or distributed on a network composed of multiple computing apparatuses; they may be implemented by a program code which is capable of being executed by the computing apparatus, so that they may be stored in a storage apparatus and executed by the computing apparatus; and in some situations, the presented or described steps may be executed in an order different from that described here; or they are made into integrated circuit modules, respectively; or multiple modules and steps of them are made into a single integrated circuit module to realize. In this way, the present invention is not limited to any particular combination of hardware and software.

The above are only some embodiments of the present invention, and is not intended to limit the present invention, and for those of ordinary skill in the art, various modifications and changes can be made to the present invention. Any modifications, equivalent substitutions, improvements, etc. within the principle of the present invention shall be included in the scope of protection of the present invention.

## Claims

1. A server power supply device, comprising:

    a power supply and an energy storage device, wherein the power supply is provided with power supply ports, the energy storage device is provided with a charging port and a discharging port, one of the power supply ports is connected to the charging port, an other of the power supply ports is further configured to connect to an electrical energy input port of a server motherboard to be powered, and the discharging port is configured to connect to a component to be powered deployed on the server motherboard;
    the power supply is configured to supply power to the component to be powered through the electrical energy input port and charge the energy storage device; and
    the energy storage device is configured to, in a case where a target component in a target operating state is present in the component to be powered, continuously supply power to the target component according to a deficit of electrical energy supply of the target component in the target operating state, wherein an electrical energy demand quantity of the target component in the target operating state is greater than an electrical energy supply quantity of the power supply to the target component.

2. The device according to claim 1, wherein,
    the energy storage device comprises an energy storage component configuration board and a plurality of energy storage components, wherein the energy storage component configuration board is provided with the charging port and a plurality of sub-discharging ports, the plurality of energy storage components and the plurality of sub-discharging ports are disposed in a one-to-one correspondence, a first end of each of the plurality of energy storage components is connected with the charging port, a second end of the each of the plurality of energy storage components is connected with a corresponding sub-discharging port, each of the plurality of sub-discharging ports is

EP 4 764 786 A1

configured to connect with a power receiving port of the component to be powered on the server motherboard, and the discharging port comprises the plurality of sub-discharging ports.

3. The device according to claim 2, wherein,
a first slot configured to connect the plurality of energy storage components is deployed on the energy storage component configuration board, a first end of the first slot is connected to the charging port, a second end of the first slot is connected with the plurality of sub-discharging ports, and the each of the plurality of energy storage components is inserted into the first slot in a plug-in manner.

4. The device according to claim 3, wherein,
the first slot comprises a plurality of first sub-slots, wherein the plurality of first sub-slots are connected in series, and each of the plurality of first sub-slots is configured to connect with one of the plurality of energy storage components.

5. The device according to claim 2, wherein,
each of the plurality of energy storage components comprises a plurality of energy storage units which are sequentially connected in series.

6. The device according to claim 5, wherein each of the plurality of energy storage units comprises a solid-state electrolytic capacitor.

7. The device according to claim 5, wherein,
each of the plurality of the energy storage unit comprises a supercapacitor and a balancing resistor which are connected in parallel.

8. The device according to claim 2, wherein,

the each of the plurality of energy storage components comprises a plurality of energy storage units and a first controller, wherein the plurality of energy storage units have different electrical energy capacities, the plurality of energy storage units are connected in parallel, and the first controller is connected with each of the plurality of energy storage units; and
the first controller is configured to control a target energy storage unit among the plurality of energy storage units, which matches a state type of the target operating state , to be in a state of supplying power to the target component.

9. The device according to claim 8, wherein,
the first controller is configured to, in a case where a power supply quantity of the power supply to the target component does not meet the electrical energy demand quantity of the target component, select, from the plurality of energy storage units having different electrical energy capacities, the target energy storage unit which meets a remaining capacity required by the target component to supply power to the target component.

10. The device according to claim 8, wherein,

the each of the plurality of energy storage unit comprises a capacitor and a first control switch, wherein the first control switch is connected to a first power supply link between the capacitor and the sub-discharging port, and the first control switch is further connected with the first controller;
the first controller is configured to adjust a closed state of the first control switch; and
the first control switch is configured to adjust an on-off state of the first power supply link.

11. The device according to claim 10, wherein,
the first controller is further configured to predict power supply demand information of the component to be powered in a future time period according to operational mode information of the component to be powered before a current moment; in a case where the power supply demand information indicates that the component to be powered requires an use of the target energy storage unit currently to be charged for power supply, obtain a current power supply state of the power supply to the server motherboard; and in a case where the power supply state indicates that a remaining electrical energy supply quantity of the power supply is less than a target electrical energy quantity, select, from other energy storage units of the plurality of energy storage units and according to an electrical energy demand quantity of the target energy storage unit, a candidate energy storage unit configured to charge the target energy storage unit, and control the candidate energy storage unit to charge the target energy storage unit by controlling a closure of the first control switches in the target energy storage unit and the candidate energy storage unit.

12. The device according to claim 8, wherein,

    the each of the plurality of energy storage units comprises a capacitor and a first signal collector, wherein the first signal collector is connected to a first power supply link between the capacitor and the sub-discharging port, and the first signal collector is further connected with the first controller;
    the first signal collector is configured to collect discharge information of the capacitor and send the discharge information to the first controller; and
    the first controller is configured to, in a case where it is determined that the discharge information indicates that the capacitor is in a discharged state, detect power supply information of the power supply to the server motherboard; and in a case where the power supply information is configured to indicate that an electrical energy demand quantity of the server motherboard is less than an electrical energy supply quantity of the power supply, control the power supply to charge the capacitor.

13. The device according to claim 1, wherein,
the energy storage device comprises an adapter board and an energy storage component, wherein the adapter board is provided with the charging port, the discharging port, and a connection link, the charging port and the discharging port are connected through the connection link, the power supply is configured to supply power to the electrical energy input port through the connection link, and the energy storage component is bridged to the connection link.

14. The device according to claim 13, wherein,
the adapter board is provided with a second slot configured to connect the energy storage component, a first end of the second slot is connected with the charging port, a second end of the second slot is connected with the discharging port, and the energy storage component is connected with the second slot in a plug-in manner.

15. The device according to claim 13, wherein,
the energy storage component comprises a plurality of energy storage units which are sequentially connected in series.

16. The device according to claim 15, wherein,
the energy storage unit comprises a supercapacitor and a balancing resistor which are connected in parallel.

17. The device according to claim 15, wherein the energy storage unit comprises a solid-state electrolytic capacitor.

18. The device according to claim 13, wherein,

    the energy storage component comprises a plurality of energy storage units and a second controller, wherein the plurality of energy storage units have different electrical energy capacities, the plurality of energy storage units are connected in parallel, and the second controller is connected with each of the plurality of energy storage units; and
    the second controller is configured to control a target energy storage unit among the plurality of energy storage units, which matches a state type of the target operating state, to be in a state of supplying power to the target component.

19. The device according to claim 18, wherein,

    the each of the plurality of energy storage unit comprises a capacitor and a second control switch, wherein the second control switch is connected to a second power supply link between the capacitor and the discharging port, and the second control switch is further connected with the second controller;
    the second controller is configured to adjust a closed state of the second control switch; and
    the second control switch is configured to adjust an on-off state of the second power supply link.

20. The device according to claim 18, wherein,

    each of the plurality of energy storage unit comprises a capacitor and a second signal collector, wherein the second signal collector is connected to a second power supply link between the capacitor and the discharging port, and the second signal collector is further connected with the second controller;
    the second signal collector is configured to collect discharge information of the capacitor and send the discharge information to the second controller; and

the second controller is configured to, in a case where it is determined that the discharge information indicates that the capacitor is in a discharged state, detect power supply information of the power supply to the server motherboard; and in a case where the power supply information is configured to indicate that an electrical energy demand quantity of the server motherboard is less than the electrical energy supply quantity of the power supply, control the power supply to charge the capacitor.

Motherboard

Component to be
powered

Power
supply

Component to be
powered

Electrical energy input port

Power
supply

Power
supply

Power supply

Energy storage device

Charge

Fig. 1

Server motherboard

Component to
be powered

Power receiving
port

Power
supply

Component to
be powered

Power receiving
port

Electrical energy input
port

Power
supply

Power
supply

Power supply

Charge

Charging port

Sub-discharging
port

Sub-discharging
port

Energy storage
component

Energy storage
component

Energy storage component
configuration board

Fig. 2

Fig. 3

Fig. 4

Server
motherboard

Component to be
powered

Power
supply

Component to be
powered

Electrical energy input port

Adapter
board

Discharging port

Connec
tion link

Energy storage
component

Connec
tion link

Charging port

Power supply

Fig. 5

Fig. 6

Server motherboard

Operational mode
information of GPU

First-level energy
storage unit

Second-level energy
storage unit

Second controller

Third-level energy
storage unit

Power supply

Fig. 7

Server motherboard

Operational mode
information of GPU

Signal acquisition
resistor

First-level capacitor

Q1

Signal collector

V
NI+
NI-

Second-level capacitor

Q2

NI+
V
NI-

Second controller

Third-level capacitor

Q3

NI+
V
NI-

Power supply

Fig. 8

Capacitor board

Charging port

C — C — C — C — Discharging port — GPU0

C — C — C — C — Discharging port — GPU1

C — C — C — C — Discharging port — GPU2

C — C — C — C — Discharging port — GPU3

Fig. 9

V+

Output gold finger connector

C R

C R

C R

C R

C R

C R

Input connector

V−

Fig. 10

## INTERNATIONAL SEARCH REPORT

| International application No. |
| --- |
| **PCT/CN2025/107749** |

**A.    CLASSIFICATION OF SUBJECT MATTER**

G06F 1/26(2006.01)i

According to International Patent Classification (IPC) or to both national classification and IPC

**B.    FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNKI, dwpi, CNTXT, ENTXTC: 供电, 尖峰负载, 超频, 供电电源, 储能器, 充电, 放电, 端口, power, speaking load, overclocking, power supply, energy storage, charge, discharge, port, Electric Design Peak Power

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 118860106 A (SUZHOU METABRAIN INTELLIGENT TECHNOLOGY CO., LTD.) 29 October 2024 (2024-10-29)<br>description, paragraphs 1-144, and figures 1-10 | 1-20 |
| Y | CN 111446718 A (HUAWEI TECHNOLOGIES CO., LTD.) 24 July 2020 (2020-07-24)<br>description, paragraphs 1-192, and figures 1-10 | 1-20 |
| Y | CN 118630852 A (HUAWEI DIGITAL POWER TECHNOLOGIES CO., LTD.) 10 September 2024 (2024-09-10)<br>description, paragraphs 1-54, and figures 1-5B | 1-20 |
| A | CN 115576408 A (SUZHOU INSPUR INTELLIGENT TECHNOLOGY CO., LTD.) 06 January 2023 (2023-01-06)<br>entire document | 1-20 |
| A | CN 118523447 A (GUANGDONG POWER GRID COMPANY et al.) 20 August 2024 (2024-08-20)<br>entire document | 1-20 |
| A | DE 102011014133 A1 (HEINDL MAXIMILIAN et al.) 20 September 2012 (2012-09-20)<br>entire document | 1-20 |

☐ Further documents are listed in the continuation of Box C.          ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 September 2025** | **30 September 2025** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2025/107749** |

| Patent document cited in search report | | | Publication date (day/month/year) | Patent family member(s) | | | Publication date (day/month/year) |
| --- | --- | --- | --- | --- | --- | --- | --- |
| CN | 118860106 | A | 29 October 2024 | CN | 118860106 | B | 25 April 2025 |
| CN | 111446718 | A | 24 July 2020 | WO | 2021175215 | A1 | 10 September 2021 |
| CN | 118630852 | A | 10 September 2024 | None | | | |
| CN | 115576408 | A | 06 January 2023 | None | | | |
| CN | 118523447 | A | 20 August 2024 | None | | | |
| DE | 102011014133 | A1 | 20 September 2012 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411342990